# FASCICULE DE BREVET EUROPEEN

(11) **EP 0 885 109 B1**
(45) Date de publication et mention de la délivrance du brevet: **22.08.2001**
(21) Numéro de dépôt: 97907156.0
(22) Date de dépôt: 03.03.1997
(51) Int. Cl.: B29C 49/18, B29C 49/54

(54) **PROCEDE ET INSTALLATION POUR LA FABRICATION DE RECIPIENTS EN MATIERES THERMOPLASTIQUES**
VERFAHREN UND VORRICHTUNG ZUM HERSTELLEN VON BEHÄLTERN AUS KUNSTSTOFF
METHOD AND APPARATUS FOR MAKING CONTAINERS FROM THERMOPLASTIC MATERIALS

(30) Priorité: 05.03.1996 FR 9603329
(43) Date de publication de la demande: 23.12.1998
(73) Titulaire: SIDEL S.A., 76053 Le Havre Cédex (FR)
(72) Inventeur: VILLERS, Pascal, F-76053 Le Havre Cédex (FR)
(74) Mandataire: Siloret, Patrick
(86) Numéro de dépôt international: FR9700366
(87) Numéro de publication internationale: WO9732712

(56) Documents cités:
- EP-A- 0 425 360
- WO-A-95/18005
- DE-A- 2 450 696
- FR-A- 2 508 004

## Description

L'invention est relative à des perfectionnements apportés aux procédés et installations de fabrication de récipients, en matériaux thermoplastiques, telles des bouteilles, présentant un fond comportant une partie centrale incurvée, avec une convexité tournée vers l'intérieur, à partir d'ébauches présentant elles-mêmes un fond comportant une partie centrale incurvée avec une convexité tournée vers l'intérieur, le procédé comprenant au moins une étape de chauffage d'au moins le corps de l'ébauche pour porter le matériau thermoplastique à sa température de ramollissement, une étape au cours de laquelle l'ébauche est positionnée dans un moule de finition agencé pour obtenir le récipient définitif, et possédant notamment un fond de moule avec une partie centrale voûtée dont la forme et les dimensions lui permettent d'être introduites dans le creux du fond de l'ébauche, et une étape de finition par soufflage de l'ébauche durant laquelle la partie centrale voûtée du fond de moule est introduite dans la partie centrale, creuse du fond de l'ébauche.

Des procédés et installations permettant d'obtenir des récipients à partir d'ébauches sont maintenant bien connus. Ils permettent d'obtenir des récipients aptes à subir ultérieurement, sans déformations notables, des contraintes thermiques ou mécaniques relativement sévères au cours de leur utilisation. Dans de tels procédés, on moule par soufflage ou étirage-soufflage, à partir d'une préforme en matériau thermoplastique, dont le corps est porté à une température au moins égale à la température de ramollissement du matériau, un récipient intermédiaire possédant des dimensions supérieures à celles du récipient définitif à obtenir; ce récipient intermédiaire est ensuite traité thermiquement pour obtenir une ébauche à corps rétréci chaud, laquelle est ensuite moulée pour former le récipient définitif.

De tels procédé et installation sont par exemple connus du brevet européen EP 442 836 au nom de la demanderesse.

Bien que ce procédé connu donne toute satisfaction eu égard aux avantages procurés par rapport aux procédés qui lui étaient antérieurs, il s'est avéré que les récipients obtenus présentaient un fond sujet à déformation lors du remplissage à chaud, cette déformation provoquant une instabilité du récipient. On a alors travaillé la structure même du fond, et il s'est avéré que des récipients présentant un fond incurvé avec une convexité tournée vers l'intérieur, en d'autres termes des récipients avec un « fond Champagne » en raison de la forme de leur fond qui évoque celui d'une bouteille de vin de Champagne, résistent de façon satisfaisante.

On a alors imaginé divers procédés et installations pour aboutir à un tel type de fond sur les récipients définitifs. Il s'est avéré que les récipients possédant les meilleures caractéristiques mécaniques ou thermiques à l'usage sont ceux obtenus à partir d'une ébauche possédant au moins une amorce de la partie centrale, incurvée, avec une convexité tournée vers l'intérieur, du fond du récipient définitif. Il s'est même avéré dans certaines applications que l'ébauche doit présenter un fond dont la forme et les dimensions doivent correspondre à celles du fond du récipient définitif à obtenir.

Ainsi, la demande internationale WO-A-9 624 525 présente un procédé et une installation selon le préambule des présentes revendications 1 et 10 permettant d'obtenir un récipient avec un fond champagne particulier à partir d'une ébauche dont le fond possède la forme et les dimensions du fond du récipient définitif.

Or, contrairement au récipient intermédiaire et au récipient final qui sont obtenus chacun respectivement dans un moule distinct, l'ébauche est obtenue à l'air libre, après avoir chauffé fortement le corps du récipient intermédiaire et provoqué ainsi une relaxation des contraintes induites dans le matériau thermoplastique lors de la transformation de la préforme en récipient intermédiaire. Il en résulte que l'ébauche ressemble à un récipient dont le corps est vaguement déformé ou boursouflé, mais qui possède néanmoins une zone de fond avec une forme et des dimensions déterminées par le procédé mis en oeuvre, c'est-à-dire soit la forme et les dimensions du fond du récipient définitif, soit une amorce de la partie centrale du fond définitif.

Cependant, en raison de la relative indétermination de la forme du corps de l'ébauche, il arrive relativement souvent que l'axe de symétrie de la zone de fond soit décalé et/ou incliné par rapport à l'axe du moule de finition au moment où l'ébauche est placée dans ce dernier. En effet, le positionnement de l'ébauche dans le moule de finition s'effectue de façon connue à l'aide du col (du goulot) qui est la seule partie qui ne subit aucune déformation pendant les différentes étapes de transformation d'une préforme en récipient.

Il en résulte qu'il arrive que la zone de fond de l'ébauche ne soit pas correctement centrée au moment où se produit le contact avec la partie centrale voûtée du fond de moule, ce qui a parfois pour conséquence que, lors de la finition, le fond de l'ébauche se bloque sur la partie centrale voûtée du fond de moule dans la position décalée et/ou désaxée qu'il occupe, de sorte que le récipient final n'a pas une forme satisfaisante.

L'invention a donc pour objet de remédier à ces inconvénients, en proposant un procédé permettant d'obtenir un centrage correct de la zone centrale, incurvée de l'ébauche par rapport à la partie voûtée du fond de moule.

Cet objet est atteint en mettant en oeuvre un procédé tel qu'indiqué au préambule de la revendication 1 qui se caractérise en ce que, pour faciliter le centrage du fond de l'ébauche par rapport à la partie centrale, voûtée, du fond de moule au moment de leur contact, un mouvement relatif de rotation entre la partie voûtée du fond de moule et la partie centrale de l'ébauche est provoqué entre le moment où l'ébauche est placée dans le moule et celui où lesdites parties sont correctement positionnées l'une par rapport à l'autre.

En fait, le mouvement relatif de rotation entre le fond de l'ébauche et le fond de moule favorise le glissement du matériau sur la partie centrale du fond de moule, permettant ainsi un centrage correct.

De préférence, et selon une autre caractéristique, le mouvement relatif de rotation est provoqué en entraînant en rotation au moins la partie centrale, voûtée, du fond de moule. Alternativement, mais bien que cela soit plus difficile à mettre en oeuvre, le mouvement relatif est obtenu en mettant l'ébauche en rotation par rapport au moule.

L'invention a également pour objet une installation selon la revendication 10 pour la mise en oeuvre du procédé.

Dans un mode de mise en oeuvre préféré, les moyens pour provoquer la rotation relative entre l'ébauche et la partie centrale du fond de moule sont constitués par un moteur rotatif pneumatique, entraînant ladite partie centrale. Cette solution est particulièrement avantageuse car les installations de fabrication de récipients comportent des organes de distribution de fluide sous pression tant pour souffler les récipients que pour déplacer des parties de l'installation. Notamment, les fonds de moules sont généralement déplaçables dans une direction orientée selon l'axe du moule, au moins pour faciliter la mise en place de l'ébauche et pour faciliter le démoulage du récipient; dans d'autres cas, les fonds de moules sont déplacés selon le même axe lors de la phase de finition, comme c'est le cas dans la demande française n° 95 01507 précitée de la demanderesse, pour compenser un léger raccourcissement qui survient généralement au début du soufflage de finition et permettre la mise en contact du fond de moule et du fond de l'ébauche. Ces déplacements des fonds de moules sont obtenus à l'aide de dispositifs pneumatiques, et il est donc relativement aisé de dériver sélectivement une partie du fluide servant au déplacement des fonds de moules pour entraîner le moteur pneumatique rotatif.

D'autres caractéristiques et avantages de l'invention apparaîtront à la lecture de la description qui va suivre, faite à la lueur des figures annexées, sur lesquelles :
- les figures 1 et 2 illustrent, chacune de façon schématique, différentes étapes possibles d'un procédé de fabrication de récipients à partir d'une préforme, transformée en récipient intermédiaire, lui-même traité thermiquement pour obtenir une ébauche avant de souffler le récipient final;
- les figures 3A à 3C et 4A à 4C illustrent, de façon schématique, deux variantes d'une installation pour la mise en oeuvre du procédé de l'invention.

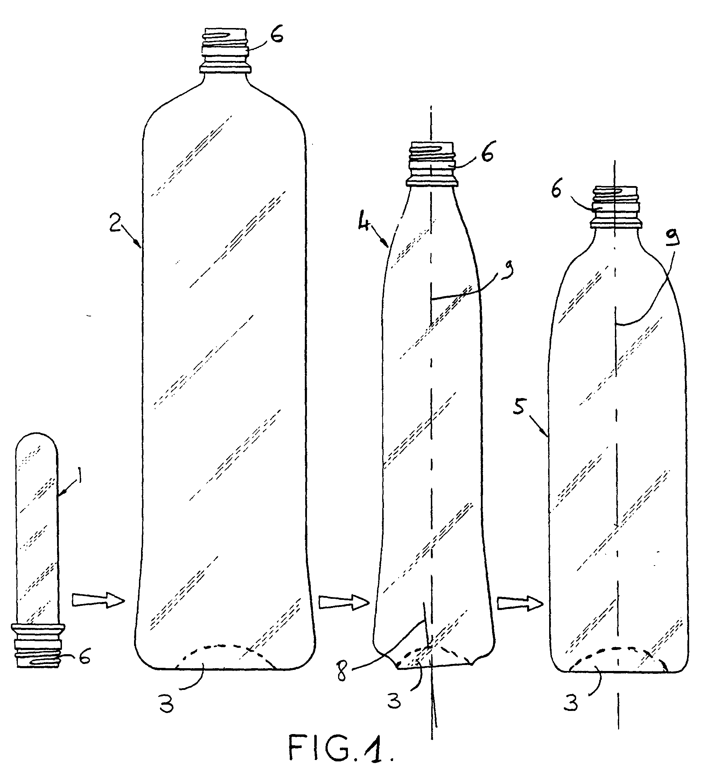

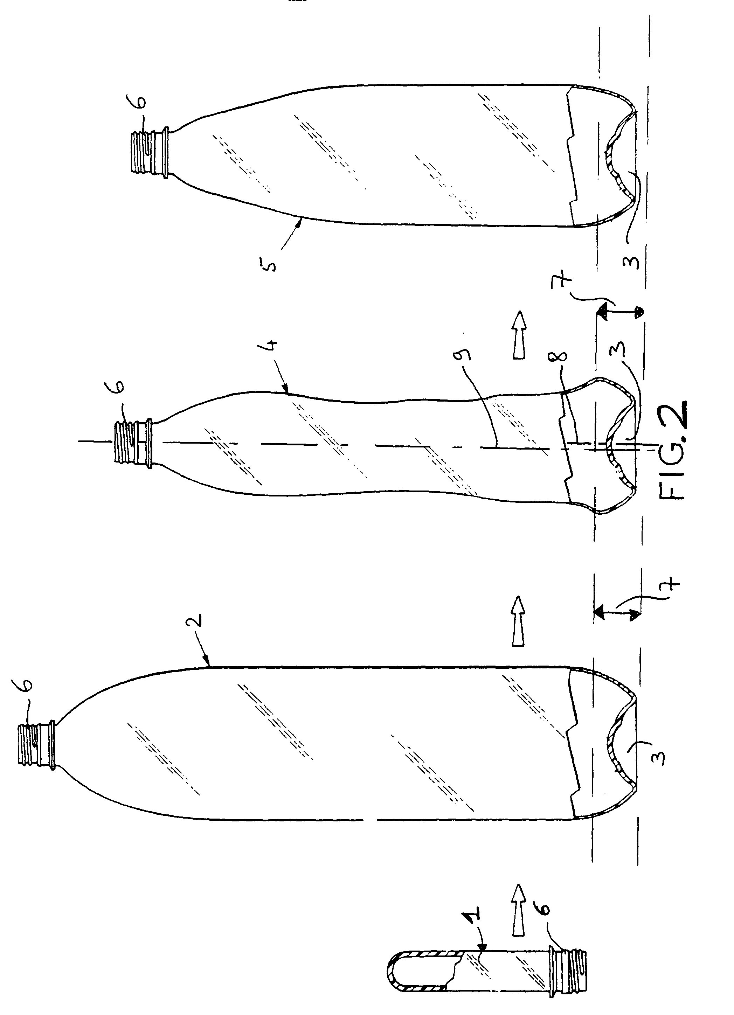

Les figures 1 et 2 illustrent des étapes connues de fabrication d'un récipient possédant un fond rentrant en passant par une étape de finition consistant à souffler une ébauche.

Une préforme initiale 1 est placée, après avoir subi un traitement thermique approprié pour ramollir le matériau thermoplastique la constituant, dans un premier moule (non représenté) dans lequel elle est soufflée ou étirée puis soufflée, pour obtenir un récipient intermédiaire 2 possédant un fond avec une partie 3 creuse, à convexité tournée vers l'intérieur du récipient 2.

Le récipient intermédiaire 2 subit alors un traitement thermique qui permet de libérer les contraintes induites lors du soufflage (ou de l'étirage soufflage), ce qui conduit à une ébauche 4 chaude à corps rétréci longitudinalement et transversalement par rapport au récipient intermédiaire.

Les étapes précédentes sont par exemple conduites dans les conditions générales indiquées dans le document européen EP 0 442 836 mentionné au préambule. Mais d'autres solutions relevant toutes des connaissances générales de l'Homme de l'Art peuvent être employées et/ou combinées et/ou adaptées pour parvenir au résultat recherché.

L'ébauche 4 subit alors un traitement thermique approprié pour permettre qu'elle soit traitée dans un moule de finition (non représenté) permettant d'obtenir le récipient final 5.

De préférence, et de façon connue, le col 6 du récipient final correspond, en forme et en dimensions, à celui de la préforme. Il ne subit pas de modifications dimensionnelles pendant les diverses étapes de transformation.

Il convient enfin de rappeler qu'un traitement thermique particulier peut être appliqué à l'ébauche 4 et au col 6 de celle-ci pour augmenter de façon notable le taux de cristallinité du récipient final 5 par rapport à ce qui peut être obtenu par un procédé classique de soufflage.

De ce fait, l'invention est tout particulièrement adaptée à la fabrication de récipients capables de supporter des contraintes thermiques ou mécaniques sévères d'utilisation.

La différence entre les figures 1 et 2 tient au fait que, dans le cas de la figure 1, le fond de l'ébauche 4 est sensiblement différent de celui du récipient 5 définitif, alors que, dans le cas de la figure 2, le fond de l'ébauche correspond à celui du récipient définitif. En fait, le procédé dont les étapes sont illustrées par la figure 2, connu en soi de la demande française 95 01507, consiste entre autres, à réaliser le récipient intermédiaire 2 avec une zone de fond 7 qui ne subit plus de déformation lors des étapes suivantes de constitution de l'ébauche 4 et de soufflage de finition.

Par contre, et de façon connue également, le procédé illustré par la figure 1 suppose que le traitement thermique appliqué à l'ébauche permette une modification du fond lors du soufflage final, pour l'amener à sa forme définitive.

Comme évoqué, la phase de libération des contraintes permettant d'aboutir à l'ébauche 4, à partir du récipient intermédiaire 2, conduit souvent à une ébauche 4 dont l'axe 8 de symétrie de la partie creuse 3 du fond est décalé axialement et/ou incliné par rapport à l'axe 9 de symétrie du col qui correspond à l'axe de symétrie de l'ensemble du récipient final 5.

Or, comme indiqué, le moule utilisé lors de la phase de finition, comporte un fond avec une partie voûtée destinée à pénétrer dans la partie creuse 3 du fond de l'ébauche, pour éviter une déformation incontrôlée de cette partie creuse. A cet effet, le fond de moule est mobile selon une direction axiale et est amené au contact du fond de l'ébauche pendant la phase de finition. Selon la complexité du procédé de finition, le fond de moule peut être amené au contact de l'ébauche immédiatement au moment de la fermeture du moule, ou bien encore, comme décrit dans la demande de brevet français publiée sous le numéro 2 714 631 au nom de la demanderesse, le fond de moule peut être amené au contact du fond pendant le soufflage de finition.

Si, comme illustré par les figures 1 et 2, les axes 8 du fond de l'ébauche 4, et 9 passant par le col, sont décalés, on aboutit parfois à un mauvais positionnement de la partie voûtée dans le creux 3, et on obtient une bouteille déformée.

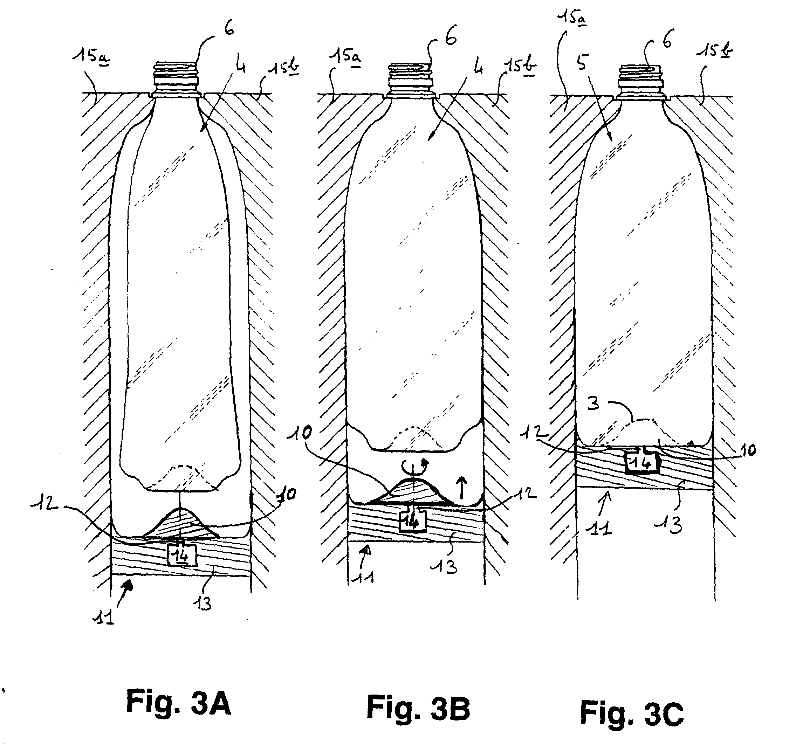

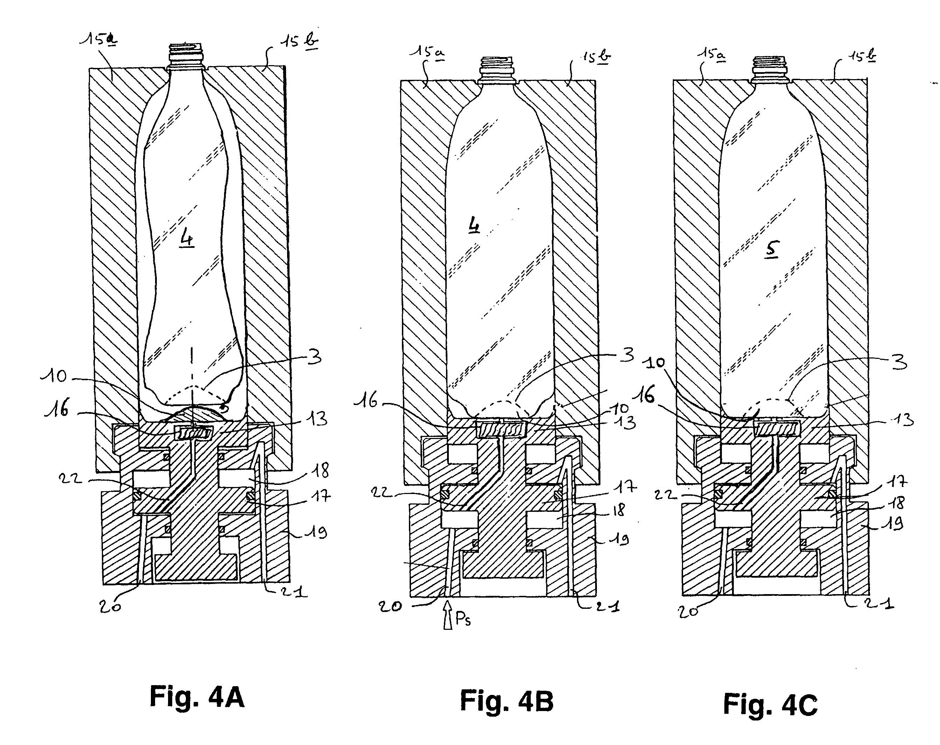

Conformément à l'invention, et comme illustré par les figures 3A à 3C et 4A à 4C, une rotation relative entre l'ébauche 4 et la partie centrale voûtée 10 du fond de moule 11 est provoquée.

Une première solution, non illustrée par les figures, et relativement difficile à mettre en oeuvre, consiste à faire tourner l'ébauche par rapport au moule. Cette solution n'est envisageable que si le fond de moule est amené au contact du fond de l'ébauche au moment de la fermeture du moule. En effet, après fermeture, dès que le soufflage de finition commence, il survient un gonflement de l'épaule et du corps de l'ébauche qui viennent en contact avec les parois de la cavité de moulage. Dès lors, si la solution qui consiste à faire tourner l'ébauche est retenue, il faut immédiatement cesser la rotation avant cette arrivée en contact d'une partie de l'épaule ou du corps avec les parois du moule, faute de quoi le récipient final sera de mauvaise qualité.

Par ailleurs, d'autres contraintes technologiques font préférer à cette solution celles illustrées par les figures 3A à 3c et 4A à 4C, qui consistent à constituer le fond de moule pour que la partie centrale voûtée 10 du fond 11 soit mise en rotation.

Dans les modes de réalisation, illustrés par les figures 3A à 3C et 4A à 4C, le fond de moule 11, mobile axialement selon l'axe du moule de finition, est en au moins deux parties : la partie centrale voûtée 10 agencée pour être entraînée en rotation autour de l'axe 12 du fond confondu avec l'axe du moule et du récipient à obtenir, et une partie périphérique 13 portant la partie centrale 10 rotative.

De préférence, la partie périphérique est animée du seul mouvement de translation axial.

Sur les figures 3A à 3C, l'entraînement en rotation de la partie centrale voûtée 10 s'effectue à l'aide d'un moteur 14, tel un moteur électrique, fixé au bloc constituant la partie périphérique du fond 11 de moule. Le moule comporte par ailleurs, de façon connue, en plus du fond 11 de moule, deux demi-moules 15a, 15b déterminant la forme et les dimensions finales du corps et de l'épaule du récipient 5 définitif.

Les figures 4A à 4C illustrent un mode de réalisation préféré d'une installation pour la mise en oeuvre du procédé de l'invention. Ce mode de réalisation utilise, pour l'entraînement de la partie centrale 10 voûtée un moteur 16 pneumatique. La structure de tels moteurs est connue dans diverses applications et ne sera pas reprise en détail sur les figures. Un tel moteur comporte une turbine motrice entraînée par un fluide, tel de l'air, sous pression, et le mouvement de rotation de la turbine est transmis à la partie centrale 10 par l'intermédiaire d'engrenages ou moyens équivalents dont la réalisation est à la portée de l'Homme du Métier.

De façon très avantageuse, le fluide sous pression utilisé pour la mise en rotation du moteur pneumatique 16 est par exemple l'air comprimé qui sert à entraîner un piston 17 duquel le fond de moule 11 est solidaire pour provoquer le déplacement longitudinal de ce dernier et l'amener au contact du fond de l'ébauche 4.

En effet, le fond 11 de moule est, de façon connue, solidaire du piston 17, lequel est associé de façon mobile à une chambre 18 ménagée dans une embase 19. Cette embase 19 est elle-même mobile, selon l'axe longitudinal de la cavité de moulage entre une position haute et une position basse. En position haute, l'embase 19 est enserrée dans les parties inférieures des demi-moules 15a, 15b, et complète la cavité de moulage. La position basse permet le démoulage du récipient.

Lorsque l'embase est en position haute comme sur les figures 4A à 4C, il est possible de déplacer le piston 17, grâce à un fluide sous pression, tel l'air comprimé circulant dans l'installation pour le soufflage des récipients.

Le vérin ainsi constitué par le piston et la chambre est à double effet, et deux conduits 20, 21, traversent l'embase pour déboucher de part et d'autre de la chambre 18 du piston 17.

Un premier conduit 20 permet d'amener le fond 11 de moule au contact du fond de l'ébauche; le second 21 permet d'écarter le fond de moule, en le redescendant.

Pour permettre l'entraînement du moteur 16 pneumatique par le fluide amenant le fond 11 de moule au contact du fond de l'ébauche 4 en cours de finition, le fond 11 de moule est traversé par un conduit 22 qui débouche sur la turbine d'une part et qui est en liaison avec la chambre 18 du côté où débouche le conduit 20 pour amener le fluide permettant le déplacement du vérin 17 dans le sens du rapprochement entre le fond de moule et le fond de l'ébauche.

Ainsi, lorsque le vérin est actionné pour rapprocher le fond de moule et le fond de l'ébauche, le moteur pneumatique est automatiquement démarré.

La variante des figures 3A à 3C peut utiliser, pour l'entraînement longitudinal de fond de moule une structure similaire à celles des figures 4A à 4C, à ceci près qu'il n'est pas nécessaire de prévoir le conduit 22, puisque le moteur n'est pas pneumatique, mais électrique.

Sur les figures 3A à 3C est par ailleurs illustré le cas où le fond 11 de moule n'est pas rapproché du fond de l'ébauche 4 dès la fermeture du moule, mais est progressivement rapproché durant le soufflage de finition.

En effet, il arrive, qu'en cours d'étape de finition, et ceci a été décrit et expliqué dans la demande de brevet français 2 714 631 déjà mentionnée, il survient que l'ébauche subisse une diminution de hauteur, par suite du gonflement de l'épaule et du corps qui, en venant en contact avec les parois de la cavité 15a, 15b de montage, font remonter le fond, par étirage élastique.

Pour éviter de trop surétirer les parois, on remonte alors le fond de moule.

Ainsi, la figure 3A illustre la phase suivant immédiatement la fermeture du moule de finition : l'ébauche 4 est à la longueur maximale, et le fond de moule est en position basse.

La figure 3B présente, de façon exagérée, la forme de l'ébauche 4 après le commencement du soufflage.

L'ébauche s'est rétractée, et son fond est remonté; le fond 11 de moule est en cours de remontée, avec sa partie centrale voûtée 10 en rotation.

La figure 3C montre le récipient terminé et la position qu'occupe le fond de moule à l'issue de cette phase.

Sur les figures 4A à 4C est illustré le cas où le fond 11 de moule est amené au contact du fond de l'ébauche 4 immédiatement après la fermeture du moule.

Sur la figure 4A, le fond 11 de moule n'a pas encore amorcé sa remontée, mais la partie centrale 10 est en rotation. A cet effet, un fluide sous pression Ps est injecté dans le conduit 20. La remontée s'amorce ensuite et le fond 11 de moule vient occuper la position illustrée sur la figure 4B.

Par ailleurs, les figures 4A à 4C illustrent le cas où la forme du fond de l'ébauche ne correspond pas totalement à celle du fond du récipient 5 définitif, et la figure 4B montre ledit récipient à sa forme quasi définitive à l'exception du fond qui n'est pas encore totalement formé. la figure 4C enfin montre le récipient 5 achevé et la position relative qu'occupent le récipient 5, et les différentes parties (parois 15a, 15b, et fond 11) du moule.

La mise en rotation de la partie centrale 10, voûtée, du fond de moule permet d'obtenir un centrage correct du fond et donc un récipient 5 définitif satisfaisant.

Il est bien entendu que l'invention ne se limite nullement aux modes d'application et de réalisation qui ont été plus particulièrement envisagés, mais embrasse toutes les variantes entrant dans le cadre défini par les revendications.

## Revendications

1. Procédé de fabrication d'un récipient (5), tel qu'une bouteille en matériau thermoplastique présentant un fond comportant une partie centrale (3) incurvée, avec une convexité tournée vers l'intérieur, à partir d'une ébauche (4) présentant elle-même un fond comportant une partie centrale (3) incurvée, avec une convexité tournée vers l'intérieur, le procédé comprenant au moins : une étape de chauffage d'au moins le corps de l'ébauche pour porter le matériau thermoplastique à sa température de ramollissement; une étape au cours de laquelle l'ébauche est positionnée dans un moule de finition (11; 15a, 15b) agencé pour obtenir le récipient définitif, ledit moule possédant notamment un fond (11) avec une partie centrale (10) voûtée dont la forme et les dimensions lui permettent d'être introduite dans la partie centrale (3) creuse du fond de l'ébauche, et une étape de finition du récipient, par soufflage de l'ébauche, étape au cours de laquelle la partie centrale (10) voûtée est introduite dans la partie centrale (3) creuse du fond de l'ébauche, caractérisé en ce que, pour faciliter le centrage de la partie centrale (3) creuse du fond de l'ébauche par rapport à la partie centrale (10) voûtée du fond de moule au moment de leur contact, un mouvement relatif de rotation entre au moins la partie centrale (10) voûtée du moule et la partie centrale (3) creuse du fond de l'ébauche est provoqué entre le moment où l'ébauche est introduite dans le moule et le moment où lesdites parties centrales du fond de moule et de l'ébauche sont en position correcte l'une par rapport à l'autre.

2. Procédé selon la revendication 1, caractérisé en ce que la forme et les dimensions du creux (3) du fond de l'ébauche (4) correspondent à la forme et aux dimensions du fond du récipient définitif, et ledit fond n'est pas modifié durant l'étape de finition.

3. Procédé selon la revendication 2, caractérisé en ce que le fond de l'ébauche (4) n'est pas porté à la température de ramollissement du matériau durant l'étape de chauffage de l'ébauche.

4. Procédé selon la revendication 1, caractérisé en ce que le fond de l'ébauche est une amorce du fond du récipient définitif, et en ce que le fond de l'ébauche est réchauffé durant l'étape de chauffage pour que le matériau soit porté à sa température de ramollissement, et est modifié durant l'étape de finition pour obtenir le fond du récipient définitif.

5. Procédé selon l'une des revendications 1 à 4 précédentes, caractérisé en ce que la forme et les dimensions de la partie centrale (10) , voûtée, du fond de moule correspondent sensiblement à celles, respectives, de la partie (3) de fond, incurvée, du récipient définitif.

6. Procédé selon l'une des revendications 1 à 5 précédentes, caractérisé en ce qu'au cours de l'étape de finition, le fond (11) de moule est déplacé axialement dans le moule pour être positionné par rapport au fond de l'ébauche, et la rotation relative entre les parties centrales du fond de moule et du fond de l'ébauche est provoquée durant ce déplacement.

7. Procédé selon l'une des revendications 1 à 5 précédentes, caractérisé en ce que, durant le soufflage, lors de l'étape de finition, il est provoqué une modification sensible de la longueur de l'ébauche, au cours duquel le fond de moule est rapproché du fond de l'ébauche, pour venir à son contact, et la rotation relative entre les parties centrales du fond de moule et du fond de l'ébauche est provoquée durant cette modification.

8. Procédé selon l'une des revendications 1 à 7, caractérisé en ce que la rotation relative est provoquée en faisant tourner l'ébauche (4) dans le moule.

9. Procédé selon l'une des revendications 1 à 7, caractérisé en ce que la rotation relative est provoquée en faisant tourner la partie centrale (10), voûtée, du fond de moule par rapport aux autres parties du moule.

10. Installation pour la mise en oeuvre du procédé selon l'une des revendications 1 à 9, comportant un moule de finition (11; 15a, 15b) du récipient, le moule possédant un fond (11) avec une partie centrale (10) voûtée dont la forme et les dimensions lui permettent d'être introduite dans la partie centrale (3) creuse du fond de l'ébauche au cours de l'étape de finition, caractérisée en ce que pour faciliter le centrage de la partie centrale (3) du fond de l'ébauche par rapport à la partie centrale (10), voûtée, du fond de moule au moment de leur contact, elle comporte des moyens (14;16) agencés pour provoquer un mouvement relatif de rotation entre au moins la partie centrale (10) voûtée du fond de moule et la partie centrale (3) du fond de l'ébauche, entre le moment où l'ébauche est introduite dans le moule et le moment où lesdites parties centrales du fond de moule et de l'ébauche sont en position correcte l'une par rapport à l'autre.

11. Installation selon la revendication 10, caractérisée en ce que les moyens provoquent la rotation de l'ébauche dans le moule.

12. Installation selon la revendication 10, caractérisée en ce que les moyens (14;16) provoquent la rotation de la partie centrale (10) voûtée du fond de moule.

13. Installation selon la revendication 12, caractérisée en ce que les moyens pour provoquer la rotation de la partie centrale, voûtée, du fond de moule sont constitués par un moteur (14;16) associé à cette dernière.

14. Installation selon la revendication 13, caractérisée en ce que le moteur est un moteur électrique (14).

15. Installation selon la revendication 13, caractérisée en ce que le moteur est un moteur pneumatique (16) entraîné par un fluide (Ps) disponible sur l'installation.

16. Installation selon la revendication 15, caractérisée en ce que le fluide est celui qui sert au soufflage du récipient définitif lors de l'étape de finition, et en ce qu'elle comporte des moyens, telle une dérivation (22), pour amener une partie de fluide de soufflage vers le moteur.

17. Installation selon la revendication 15, caractérisée en ce que le fond de moule est déplaçable axialement sous l'action de moyens pneumatiques lors de la fermeture du moule et/ou lors de l'étirage de finition, et le moteur est entraîné par une partie du fluide servant au déplacement du fond de moule.

## Claims

1. Method for manufacturing a container (5) such as a bottle made of a thermoplastic material having a bottom comprising a curved central part (3) with a convex face facing towards the inside, from a parison (4) which itself has a bottom comprising a curved central part (3) with a convex face facing towards the inside, the method comprising at least: a step of heating at least the body of the parison to bring the thermoplastic material to its softening temperature; a step during which the parison is positioned in a finishing mould (11; 15a, 15b) designed to obtain the definitive container, the said mould having, in particular, a bottom (11) with an arched central part (10), the shape and dimensions of which allow it to be introduced into the hollow central part (3) of the bottom of the parison, and a step of finishing the container, by blowing the parison, during which step the arched central part (10) is introduced into the hollow central part (3) of the bottom of the parison, characterized in that, to make the hollow central part (3) of the bottom of the parison easier to centre with respect to the arched central part (10) of the bottom of the mould at their moment of contact, a moment of relative rotation between at least the arched central part (10) of the mould and the hollow central part (3) of the bottom of the parison is brought about between the moment when the parison is introduced into the mould and the moment when the said central parts of the bottom of the mould and of the parison are in the correct position one with respect to the other.

2. Method according to Claim 1, characterized in that the shape and the dimensions of the hollow (3) in the bottom of the parison (4) correspond to the shape and to the dimensions of the bottom of the definitive container, and the said bottom is not modified during the finishing step.

3. Method according to Claim 2, characterized in that the bottom of the parison (4) is not brought to the softening temperature of the material during the step of heating the parison.

4. Method according to Claim 1, characterized in that the bottom of the parison is the start of the bottom of the definitive container, and in that the bottom of the parison is heated during the heating step so that the material is brought to its softening temperature, and is modified during the finishing step so as to obtain the bottom of the definitive container.

5. Method according to one of the preceding Claims 1 to 4, characterized in that the shape and the dimensions of the arched central part (10) of the bottom of the mould correspond more or less to the respective shape and dimensions of the curved bottom part (3) of the definitive container.

6. Method according to one of the preceding Claims 1 to 5, characterized in that, during the finishing step, the bottom (11) of the mould is moved axially in the mould to be positioned with respect to the bottom of the parison, and the relative rotation between the central parts of the bottom of the mould and the bottom of the parison is brought about during this movement.

7. Method according to one of the preceding Claims 1 to 5, characterized in that, during blowing, in the finishing step, an appreciable change in the length of the parison is brought about, during which the bottom of the mould is brought closer to the bottom of the parison, to come into contact with it, and the relative rotation between the central parts of the bottom of the mould and the bottom of the parison is brought about during this change.

8. Method according to one of the preceding Claims 1 to 7, characterized in that the relative rotation is brought about by rotating the parison (4) in the mould.

9. Method according to one of the preceding Claims 1 to 7, characterized in that the relative rotation is brought about by rotating the arched central part (10) of the bottom of the mould with respect to the other parts of the mould.

10. Equipment for implementing the method according to one of Claims 1 to 9, comprising a finishing mould (11; 15a, 15b) for the container, the mould having a bottom (11) with an arched central part (10) the shape and the dimensions of which allow it to be introduced into the hollow central part (3) of the bottom of the parison during the finishing step, characterized in that in order to make the central part (3) of the bottom of the parison easier to centre with respect to the arched central part (10) of the bottom of the mould at their moment of contact, it comprises means (14;16) designed to bring about a movement of relative rotation between at least the arched central part (10) of the bottom of the mould and the central part (3) of the bottom of the parison, between the moment when the parison is introduced into the mould and the moment when the said central parts of the bottom of the mould and of the parison are in the correct position one with respect to the other.

11. Equipment according to Claim 10, characterized in that the means cause the parison to rotate in the mould.

12. Equipment according to Claim 10, characterized in that the means (14;16) cause the arched central part (10) of the bottom of the mould to rotate.

13. Equipment according to Claim 12, characterized in that the means for causing the arched central part of the bottom of the mould to rotate consist of a motor (14;16) associated therewith.

14. Equipment according to Claim 13, characterized in that the motor is an electric motor (14).

15. Equipment according to Claim 13, characterized in that the motor is a pneumatic motor (16) driven by a fluid (Ps) available on the equipment.

16. Equipment according to Claim 15, characterized in that the fluid is the fluid used for blowing the definitive container during the finishing step and in that it comprises means, such as a tapping (22) for conveying some of the blowing fluid to the motor.

17. Equipment according to Claim 15, characterized in that the bottom of the mould can be moved axially under the action of pneumatic means when the mould is being closed and/or during the finishing drawing operation, and the motor is driven by some of the fluid used for moving the bottom of the mould.

## Patentansprüche

1. Verfahren zur Herstellung eines Behältnisses (5), wie beispielsweise einer Flasche, aus thermoplastischem Material, das einen Boden mit einem gekrümmten Mittelteil (3) mit einer nach innen gewendeten Wölbung aufweist, aus einem Rohling (4), der seinerseits einen Boden mit einem gekrümmten Mittelteil (3) mit einer nach innen gewendeten Wölbung aufweist, wobei das Verfahren zumindest folgende Verfahrensschritte umfaßt: einen Verfahrensschritt des Heizens zumindest des Körpers des Rohlings, um das thermoplastische Material auf seine Erweichungstemperatur zu bringen, einen Verfahrensschritt, während dessen der Rohling in einer Fertigstellungsform (11; 15a, 15b) positioniert wird, die dafür gestaltet ist, das endgültige Behältnis zu erhalten, wobei die Form insbesondere einen Boden (11) mit einem gewölbten Mittelteil (10) besitzt, dessen Form und Abmessungen es ihr ermöglichen, in den vertieften Mittelteil (3) des Bodens des Rohlings eingeführt zu werden, und einen Verfahrensschritt zur Fertigstellung des Behältnisses durch Aufblasen des Behältnisses, während dessen der gewölbte Mittelteil (10) in den vertieften Mittelteil (3) des Bodens des Rohlings eingeführt wird, dadurch gekennzeichnet, daß, um die Zentrierung des vertieften Mittelteils (3) des Bodens des Rohlings relativ zum gewölbten Mittelteil (10) des Bodens der Form im Moment ihres Kontaktes zu erleichtern, eine relative Drehbewegung zwischen zumindest dem gewölbten Mittelteil (10) der Form und dem vertieften Mittelteil (3) des Bodens des Rohlings bewirkt wird, zwischen dem Moment, in dem der Rohling in die Form eingeführt wird, und dem Moment, in dem die Mittelteile des Bodens der Form und des Rohlings in der richtigen Position zueinander sind.

2. Verfahren nach Anspruch 1, dadurch gekennzeichnet, daß die Form und die Abmessungen der Vertiefung (3) des Bodens des Rohlings (4) der Form und den Abmessungen des Bodens des endgültigen Behältnisses entsprechen und der Boden während des Verfahrensschritts der Fertigstellung nicht verändert wird.

3. Verfahren nach Anspruch 2, dadurch gekennzeichnet, daß der Boden des Rohlings (4) während des Verfahrensschritts des Erwärmens des Rohlings nicht auf die Erweichungstemperatur des Materials gebracht wird.

4. Verfahren nach Anspruch 1, dadurch gekennzeichnet, daß der Boden des Rohlings ein Ausgangsstück des Bodens des endgültigen Behältnisses ist, und daß der Boden des Rohlings während des Verfahrensschritts des Erwärmens wiedererwärmt wird, so daß das Material auf seine Erweichungstemperatur gebracht wird, und während des Verfahrensschritts der Fertigstellung verändert wird, um den Boden des endgültigen Behältnisses zu erhalten.

5. Verfahren nach einem der Ansprüche 1 bis 4, dadurch gekennzeichnet, daß die Form und die Abmessung des gewölbten Mittelteils (10) des Bodens der Form im wesentlichen den entsprechenden des gekrümmten Mittelteils (3) des Bodens des endgültigen Behältnisses entsprechen.

6. Verfahren nach einem der Ansprüche 1 bis 5, dadurch gekennzeichnet, daß während des Verfahrensschritts des Fertigstellens der Boden (11) der Form in der Form axial verschoben wird, um relativ zu dem Boden des Rohlings positioniert zu werden, und die relative Drehung zwischen den Mittelteilen des Bodens der Form und des Bodens des Rohlings während dieser Verschiebung bewirkt wird.

7. Verfahren nach einem der Ansprüche 1 bis 5, dadurch gekennzeichnet, daß bei dem Verfahrensschritt des Fertigstellens während des Aufblasens eine deutliche Veränderung der Länge des Rohlings bewirkt wird, währenddessen der Boden der Form dem Boden des Rohlings angenähert wird, um mit ihm in Kontakt zu kommen, und während dieser Veränderung die relative Drehung zwischen den Mittelteilen des Bodens der Form und des Bodens des Rohlings bewirkt wird.

8. Verfahren nach einem der Ansprüche 1 bis 7, dadurch gekennzeichnet, daß die relative Drehung bewirkt wird, indem der Rohling (4) in der Form gedreht wird.

9. Verfahren nach einem der Ansprüche 1 bis 7, dadurch gekennzeichnet, daß die relative Drehung bewirkt wird, indem der gewölbte Mittelteil (10) des Bodens der Form bezüglich der anderen Teile der Form gedreht wird.

10. Einrichtung zur Durchführung des Verfahrens nach einem der Ansprüche 1 bis 9, mit einer Fertigstellungsform (11; 15a, 15b) für das Behältnis, wobei die Form einen Boden (11) mit einem gewölbten Mittelteil (10) besitzt, dessen Form und Abmessungen es ihr ermöglichen, in den vertieften Mittelteil (3) des Bodens des Rohlings während des Verfahrensschritts der Fertigstellung eingeführt zu werden, dadurch gekennzeichnet, daß sie, um die Zentrierung des Mittelteils (3) des Bodens des Rohlings relativ zum gewölbten Mittelteil (10) des Bodens der Form im Moment ihres Kontaktes zu erleichtern, Mittel (14; 16) aufweist, die dafür ausgelegt sind, eine relative Drehbewegung zwischen zumindest dem gewölbten Mittelteil (10) des Bodens der Form und dem Mittelteil (3) des Bodens des Rohlings zwischen dem Moment, in dem der Rohling in die Form eingeführt wird, und dem Moment, in dem die Mittelteile des Bodens der Form und des Rohlings in der richtigen Position zueinander sind, zu bewirken.

11. Einrichtung nach Anspruch 10, dadurch gekennzeichnet, daß die Mittel die Drehung des Rohlings in der Form bewirken.

12. Einrichtung nach Anspruch 10, dadurch gekennzeichnet, daß die Mittel (14; 16) die Drehung des gewölbten Mittelteils (10) des Bodens der Form bewirken.

13. Einrichtung nach Anspruch 12, dadurch gekennzeichnet, daß die Mittel, um die Drehung des gewölbten Mittelteils des Bodens der Form zu bewirken, aus einem Motor (14; 16) bestehen, der mit diesem letzteren verbunden ist.

14. Einrichtung nach Anspruch 13, dadurch gekennzeichnet, daß der Motor ein Elektromotor (14) ist.

15. Einrichtung nach Anspruch 13, dadurch gekennzeichnet, daß der Motor ein Druckluftmotor (16) ist, der von einem in der Einrichtung verfügbaren Fluid (Ps) angetrieben wird.

16. Einrichtung nach Anspruch 15, dadurch gekennzeichnet, daß das Fluid dasjenige ist, das zum Aufblasen des endgültigen Behältnisses während des Verfahrensschritts der Fertigstellung dient, und daß sie Mittel umfaßt, wie beispielsweise eine Zweigleitung (22), um einen Teil des Aufblasfluids zum Motor zu führen.

17. Einrichtung nach Anspruch 15, dadurch gekennzeichnet, daß der Boden der Form beim Verschließen der Form und/oder bei der Streckung zur Fertigstellung unter der Einwirkung von Druckluftmitteln axial verschiebbar ist und der Motor durch einen Teil des Fluids angetrieben wird, das zur Verschiebung des Bodens der Form dient.
